# EUROPÄISCHE PATENTSCHRIFT

(11) **EP 1 076 593 B1**
(45) Veröffentlichungstag und Bekanntmachung des Hinweises auf die Patenterteilung: **22.01.2003**
(21) Anmeldenummer: 99923517.9
(22) Anmeldetag: 04.05.1999
(51) Int. Cl.: B01D 46/52

(54) **PROZESSAPPARATUR MIT ABLUFTFILTER**
PROCESS APPARATUS WITH AN OUTGOING-AIR FILTER
APPAREIL POUR PROCESSUS AVEC FILTRE D'AIR D'EVACUATION

(30) Priorität: 05.05.1998 DE 19819980
(43) Veröffentlichungstag der Anmeldung: 21.02.2001
(73) Patentinhaber: Hüttlin, Herbert, 79539 Lörrach (DE)
(72) Erfinder: Hüttlin, Herbert, 79539 Lörrach (DE)
(74) Vertreter: Heuckeroth, Volker, Dr.
(86) Internationale Anmeldenummer: EP9903026
(87) Internationale Veröffentlichungsnummer: WO99056852

(56) Entgegenhaltungen:
- EP-A- 0 409 402
- EP-A- 0 572 356
- WO-A-87/01958
- WO-A-87/04945
- DE-A- 3 515 641
- DE-C- 4 030 086
- US-A- 4 390 428
- US-A- 4 619 675
- US-A- 4 953 308

## Beschreibung

Die Erfindung betrifft eine Prozeßapparatur, insbesondere Granulier- oder Coatingapparatur, mit einer über oder neben einer Prozeßkammer angeordneten Filtereinrichtung zum Entstauben von ein partikelförmiges Gut enthaltender Prozeßluft, wobei die Filtereinrichtung zumindest ein Filter aufweist, das von der Prozeßluft von der Prozeßkammer kommend durchströmt wird.

Eine Prozeßapparatur der eingangs genannten Art ist aus der DE-PS 40 30 086 bekannt.

Bei einer derartigen Prozeßapparatur ist es erforderlich, die in der Prozeßapparatur strömende Prozeßluft, die als Trägermedium zur gleichmäßigen Verteilung oder Verwirbelung eines partikelförmigen Guts in einer Prozeßkammer verwendet wird, beim Durchtritt durch das Filter der Filtereinrichtung zu entstauben, d.h. von dem partikelförmigen Gut so zu trennen, daß die Prozeßluft nach Durchströmung des Filters aus der Apparatur staubfrei abgeführt werden kann. Das Filter dient jedoch nicht nur dem Zweck, die Prozeßluft zu entstauben, sondern auch das partikelförmige Gut in der Prozeßkammer zurückzuhalten bzw. in den Prozeß wieder zurückzuführen.

Ein spezieller Anwendungsfall betrifft eine Granulierapparatur. Beim Granulieren werden nahezu staubfeine Gutpartikel in der Prozeßkammer zu größeren Partikeln agglomeriert. Das verwirbelte partikelförmige Gut wird dazu mit einer feinversprühten Flüssigkeit behandelt, die die Agglomeration der einzelnen Gutpartikel begünstigt.

Ein weiterer spezieller Anwendungsfall ist das sogenannte Coaten. Beim Coaten wird mittels versprühter Flüssigkeit in der Prozeßkammer ein Oberflächenüberzug auf dem in der Prozeßkammer mittels der Prozeßluft bewegten partikelförmigen Gut gebildet.

Die Prozeßluft wird in derartigen Apparaturen von der sich im unteren Bereich der Apparatur befindenden Prozeßkammer durch die Filtereinrichtung nach oben oder seitlich abgeführt, indem beispielsweise in dem sich über oder neben der Prozeßkammer befindenden Abluftraum ein entsprechender Unterdruck erzeugt wird. Das partikelförmige Gut wird dabei durch die Filtereinrichtung aufgehalten und kann somit nicht aus der Prozeßkammer entweichen.

Je nach Beschaffenheit des partikelförmigen Gutes, das in Pulver-, Pellet- oder Granulatform vorliegen kann, haftet ein Teil des Guts an dem oder den Filtern der Filtereinrichtung an, wobei die Anhaftungstendenz feiner, flüssigkeitsbenetzter oder klebriger Partikel im allgemeinen größer ist als diejenige von groben oder trockenen Partikeln.

Aufgrund der mehr oder weniger ausgeprägten Anhaftungstendenz des partikelförmigen Gutes an dem oder den Filtern der Filtereinrichtung ist es daher erforderlich, das oder die Filter während des laufenden Prozesses von dem sich daran anlagernden partikelförmigen Gut zu befreien, um zu verhindern, daß das Filter für die Prozeßluft undurchlässig wird und dadurch der Prozeßluftstrom stark reduziert wird oder gar abreißt. Außerdem soll durch die Abreinigung des Filters bzw. der Filter das daran anhaftende Gut wieder dem Prozeß zugeführt werden. Nach Beendigung eines Prozesses, und vor dem Beginn eines anschließenden Prozesses, muß das Filter bzw. müssen die Filter aus der Prozeßapparatur zur vollständigen Reinigung bspw. mit einer Waschflüssigkeit ausgebaut werden. Insbesondere, wenn im nachfolgenden Prozeß ein anderes partikelförmiges Gut verarbeitet werden soll, ist eine gründliche Reinigung erforderlich.

Die aus der eingangs genannten DE-PS 40 30 086 bekannte Prozeßapparatur weist eine Filtereinrichtung auf, die mehrere auf gleicher Höhe in einem Kreis angeordnete Filterpatronen umfaßt. Jede Filterpatrone besteht aus einem sich vertikal langerstrekkenden Filterkorb als Filterkörper, der als Metallgerüst ausgebildet ist, und einem darübergezogenen textilen Filtersack als Filtermedium, der die Filterfläche der Filterpatrone bildet. Der Filterkorb weist einen zylindrischen äußeren Teil und einen kegelförmigen inneren Teil auf.

An diesen Filterpatronen ist nachteilig, daß sie eine erhebliche Bauhöhe aufweisen, wodurch der für die unter der Filtereinrichtung befindliche Prozeßkammer zur Verfügung stehende Prozeßluftraum bei vorgegebener Gesamthöhe der Prozeßapparatur klein ist. Durch die Bauweise der Filter bedingt taucht die filteraktive Fläche jedes Filters tief in die Prozeßkammer hinein, wodurch die Filterbelastung der Filterfläche jeder Filterpatrone besonders hoch ist, d.h. die Filterfläche im unteren Bereich der Filterpatronen der partikelhaltigen Prozeßluft besonders stark ausgesetzt ist.

Die erhebliche Bauhöhe der bekannten Filter ist jedoch notwendig, um eine ausreichend große aktive Filterfläche zu schaffen, die einen hohen Prozeßluftdurchsatz ermöglicht bzw. eine für den Prozeß ausreichend starke Prozeßluftströmung aufrechterhält.

Aus der DE 35 15 641 A1 ist eine Partikel-Luftfilteranordnung für ein Atemgerät offenbart, die ein radial gefaltetes Filterelement mit einer Anzahl von Faltungen aufweist.

In der US-A-4 619 675 ist ebenfalls ein Filter für eine Luftreinigungsvorrichtung für eine Staubschutzmaske, Gasmaske oder die Luftzuführung eines Computers, einer Klimaanlage und dergleichen offenbart, die ein radial gefaltetes Filterelement mit einer Anzahl von Faltungen aufweist, wobei das Filterelement aus Filterpapier gefertigt ist. Um die Abstände zwischen den einzelnen Faltungen aufrechtzuerhalten, sind Abstandshalter in Form eines entsprechend den Faltungen gebogenen Drahtes auf dem Filterpapier angeordnet.

Aus der EP-A 0 409 402 ist ein Filter für ein Atemgerät für medizinische Anwendungen bekannt, dessen Filterelement radial verlaufende Faltungen aufweist, wobei das Filtermedium aus einer Glasfasermembran besteht, die mit einem Siliconöl behandelt wurde.

Aus der Gebrauchsmusterschrift DE 84 27 328 U1 ist ein Luftfilter für Staubsauger bekannt, wobei der Luftfilter haubenartig bzw. glockenförmig ausgebildet ist. Dieses Filter weist gefaltete Filterflächen auf.

Aus der DE 41 17 550 A1 ist ein Plattenfilter aus zick-zackförmig gefaltetem Bahnenmaterial bekannt, dessen einzelne Faltlinien bzw. Filterflächen in einer Richtung parallel zueinander verlaufen. Dieser bekannte Plattenfilter dient als Fahrgastraumfilter in einem Kraftfahrzeug.

Der Erfindung liegt daher die Aufgabe zugrunde, eine Prozeßapparatur der eingangs genannten Art dahingehend weiterzubilden, ohne Vergrößerung der Prozeßapparatur als Ganzes eine relative Vergrößerung des Prozeßraumes zu erreichen.

Hinsichtlich der eingangs genannten Prozeßapparatur wird diese Aufgabe dadurch gelöst, daß das Filter eine Vielzahl von zu einem im wesentlichen kreisförmigen Filterkörper aneinandergereihten Filterflächen aufweist, die sich im wesentlichen radial erstrecken und in mäanderförmiger Geometrie bezüglich der Prozeßluftströmung geneigt sind, und daß der Filterkörper und die Filterfläche aus einem metallischen Mehrschichtgewebe gefertigt sind.

Bei der erfindungsgemäßen Prozeßapparatur ist die aktive Filtergesamtfläche des Filters aufgrund der Vielzahl von in einer mäandrierenden Struktur aneinandergereihten Filterflächen gegenüber der Filterfläche der bekannten Filterpatronen wesentlich vergrößert, so daß zur Erreichung einer vergleichbaren Filterwirkung die Bauhöhe des Filters und damit der Filtereinrichtung in der Prozeßapparatur wesentlich reduziert werden kann. Aufgrund der Vielzahl der Filterflächen, die mäanderförmig miteinander verbunden sind, kann nämlich die gesamte Filterfläche auf einen scheibenförmigen Raumabschnitt geringer Höhe konzentriert werden. Der für die Prozeßluft in der Prozeßkammer zur Verfügung stehende Raum wird somit ohne bauliche Vergrößerung der Prozeßapparatur effektiv vergrößert. Weiterhin ist aufgrund der durch die Mäandrierung des durch die Filterflächen gebildeten Filterkörpers vergrößerten Filtergesamtfläche bereits ein einziges Filter ausreichend, um eine ausreichende Filtrierung der Prozeßluft zu erreichen, wogegen im Stand der Technik eine Mehrzahl von Filterpatronen zur Erzielung einer ausreichenden Filterwirkung vorgesehen ist. Dadurch wird der weitere Vorteil erzielt, daß mit dem Filter ein wesentlich reduzierter Kostenaufwand der erfindungsgemäßen Prozeßapparatur erzielt werden kann.

Die sich radial erstreckenden und in mäanderförmiger Geometrie bezüglich einer Vertikalen geneigten Filterflächen bilden jeweils paarweise steildachförmige, nach unten offene, bspw. im wesentlichen V-förmige, Kavernen. Unter "bezüglich der Prozeßluftströmung geneigt" ist hier zu verstehen, daß die Filterflächen im eingebauten Zustand des Filters schräg zur Hauptrichtung der Prozeßluftströmung verlaufen.

Dadurch, daß das Filter aus einem metallischen Mehrschichtgewebe gefertigt ist, wird der Vorteil erzielt, daß das Filter inert ist und eine höhere chemische Beständigkeit aufweist. Die mechanische Festigkeit ist gegenüber einem textilen Filtermedium ebenfalls vorteilhaft erhöht.

Die der Erfindung zugrunde liegende Aufgabe wird somit vollkommen gelöst.

In einer bevorzugten Ausgestaltung ist der Filter im wesentlichen horizontal liegend über der Prozeßkammer angeordnet.

Hierbei besteht ein weiterer Vorteil darin, daß die Filterflächen bei gleicher Bauhöhe der Prozeßapparatur wie derjenigen der bekannten Prozeßapparatur einen größeren Abstand vom Bodender Prozeßkammer einnehmen können, wodurch die Filterbelastung des Filters geringer ist als die Filterbelastung der Filterpatrone der bekannten Prozeßapparatur, weil die Konzentration an partikelförmigem Gut in der Prozeßluft mit zunehmenden Abstand vom Boden der Prozeßkammer abnimmt. Die Bauhöhe der erfindungsgemäßen Prozeßapparatur kann sogar gegenüber herkömmlichen Prozeßapparaturen verringert werden. Die vertikalströmung der Prozeßluft kann bis an das Filter gleichmäßig und verwirbelungsarm herangeführt werden, wodurch die Sinkgeschwindigkeit des partikelförmigen Guts erhöht und das Filter selbst weitgehend entlastet wird.

In einer bevorzugten Ausgestaltung ist ein Verhältnis aus Höhe und radialer Ausdehnung der Filterflächen kleiner als 1.

Während dieses Verhältnis bei den Filterpatronen der bekannten Prozeßapparatur demgegenüber wesentlich größer als 1 ist, wird mit dieser Maßnahme die Bauhöhe des Filters und damit auch die Filterbelastung, wie zuvor erwähnt wurde, erheblich verringert, wodurch der weitere Vorteil erzielt wird, daß der Prozeßluftraum, in dem das partikelförmige Gut behandelt wird, vergrößert ist, wodurch das Ergebnis beim Granulieren oder Coaten qualitativ und quantitativ verbessert werden kann.

Dabei ist bevorzugt, wenn das Verhältnis im Bereich von etwa 0,1 bis 0,5 liegt.

Diese Maßnahme hat den Vorteil, ein sehr flach bauendes Filter zu schaffen, das trotzdem den Anforderungen an die Filterwirkung in ausreichendem Maße genügt.

In einer weiteren bevorzugten Ausgestaltung sind der Filterkörper und die Filterflächen aus demselben Werkstoff.

Diese Maßnahme hat den Vorteil, daß das Filter im Unterschied zu den Filterpatronen der bekannten Prozeßapparatur, die einen metallischen Filterkorb und einen textilen Filtersack aufweisen, insgesamt monomedial ist, d.h. Filterkörper und Filtermedium aus demselben Werkstoff bestehen, wodurch sich das Filter mit geringerem Kostenaufwand herstellen läßt und außerdem die Herstellung des Filters vereinfacht wird. Durch die mäanderförmige Geometrie besitzt das Filter bereits eine hohe statische Eigenfestigkeit, so daß auf einen Stützkörper wie den Metallkorb der bekannten Filterpatrone verzichtet werden kann.

Das Filter kann mit geringem Aufwand kostengünstig hergestellt werden, beispielsweise durch Falten eines oder mehrerer flächiger kreisförmiger Rohlinge entlang radialer Faltlinien aus dem metallischen Mehrschichtgewebe zu der mäandrierenden Struktur. Im Falle, daß das Filter aus mehreren Rohlingen gebildet wird, werden diese nach dem Falten zu dem kreisförmigen Filterkörper zusammengeschweißt oder -geklebt.

In einer weiteren bevorzugten Ausgestaltung verjüngt sich jede einzelne Filterfläche in radialer Richtung von außen nach innen strahlenförmig.

Diese Maßnahme hat den Vorteil, daß der Neigungs- bzw. Öffnungswinkel zwischen jeweils benachbarten Filterflächen über die gesamte radiale Ausdehnung der Filterflächen konstant ist. Dies hat den Vorteil, daß im Filtermaterial keine Verwindungen oder Verformungen auftreten, die die Filterwirkung beeinträchtigen könnten. Da der Großteil der Prozeßluft in Granulier- oder Coatingapparaturen im peripheren Bereich der Prozeßkammer nach oben strömt, tritt aufgrund der zum Zentrum des Filters abnehmenden aktiven Filterfläche der somit in etwa trapezförmigen Filterflächen keine spürbare Beeinträchtigung der Filterwirkung auf. Im Gegenteil hätte ein zum Zentrum des Filters abnehmender Neigungs- bzw. Öffnungswinkel zwischen den Filterflächen die nachteilige Folge, daß sich zwischen den dann zum Zentrum dichter beieinander liegenden Filterflächen verstärkt partikelförmiges Gut anlagert, das aus den engen Spalten zwischen den Filterflächen nur schwer abgereinigt werden könnte, was jedoch gerade vermieden werden soll.

In einer weiteren bevorzugten Ausgestaltung sind Zwischenräume zwischen benachbarten Filterflächen am Außenumfang des Filters radial offen.

Diese Maßnahme hat den Vorteil, daß der Filterkörper des Filters außer den mäandrierend angeordneten Filterflächen keine sonstigen Flächen aufweist, die eine gründliche Reinigung des Filters nach Beendigung des Prozesses behindern, wodurch die Reinigungseigenschaften des Filters weiter verbessert sind. Nach Beendigung eines Prozesses läßt sich das Filter leicht mit einer Waschflüssigkeit waschen, wobei die Waschflüssigkeit aus den durch die Filterflächen gebildeten kavernenartigen Zwischenräumen nach außen abfließen kann.

In einer weiteren bevorzugten Ausgestaltung ist außenumfangsseitig zumindest ein Ring mit Endkanten der Filterflächen verbunden, wobei die Breite des Ringes kleiner ist als die Höhe der Endkanten der Filterflächen.

Der zumindest eine Ring bewirkt vorteilhaft eine weitere Formstabilisierung des Filters, wobei durch die geringe Breite des Ringes die Zwischenräume zwischen den Filterflächen an den Endkanten im wesentlichen radial offen bleiben. Der zumindest eine Ring kann beispielsweise als dünnes Ringband ausgebildet sein. Bevorzugt sind zwei radial voneinander beabstandete Ringe zur Stabilisierung des Filters vorgesehen, die mit den Endkanten verklebt oder verschweißt sind.

In einer weiteren bevorzugten Ausgestaltung sind die Filterflächen in Strömungsrichtung der Prozeßluft gesehen konkav gekrümmt.

Diese Maßnahme hat den Vorteil, daß die Zwischenräume zwischen den Filterflächen auf der dem Prozeßraum zugewandten Seite, d.h. der filteraktiven Seite des Filters, einen größeren Filtratraum bilden. Die Auftriebsgeschwindigkeit der das partikelförmige Gut enthaltenden Prozeßluft wird durch den größeren Querschnitt der zwischen Filterflächen vorhandenen Zwischenräume reduziert, wodurch die Filterbelastung des Filters auf vorteilhafte Weise weiter reduziert ist.

In einer weiteren bevorzugten Ausgestaltung weist das Filter mittig eine verschließbare Öffnung auf.

Da die Prozeßluft, wie zuvor erwähnt, im wesentlichen im peripheren Bereich der Prozeßapparatur nach oben strömt, wird das Zentrum des Filters nur geringfügig von der Prozeßluft durchströmt und ist daher filterinaktiv. Die Öffnung im Zentrum des Filters eröffnet dagegen die Möglichkeit, dort einen pneumatischen oder elektrischen Rüttler zu positionieren, der das Filter während des laufendes Prozesses rüttelt, um an den Filterflächen anhaftende Partikel abzuschütteln. Wird kein derartiger Rüttler verwendet, kann die Öffnung durch einen an die Öffnung angepaßten Deckel dicht verschlossen werden.

Weiterhin erleichtert die Öffnung im Zentrum des Filters vorteilhaft die Herstellung der mäandrierenden Geometrie der Filterflächen aus einem metallischen Mehrschichtgewebe durch Falten. Der Durchmesser der Öffnung kann dabei 10 bis 30 Prozent des Gesamtdurchmessers des Filters betragen.

Weiterhin ist es bevorzugt, wenn die Filtereinrichtung genau ein derartiges Filter aufweist, dessen Durchmesser in etwa dem Durchmesser der Prozeßkammer entspricht.

Diese Maßnahme hat den Vorteil, daß die Montage der Filtereinrichtung in der Prozeßapparatur sowie die Demontage wesentlich vereinfacht ist, während die aus dem Stand der Technik bekannte Prozeßapparatur eine Filtereinrichtung mit insgesamt vier bis zehn Filterpatronen aufweist, die dementsprechend einen größeren Montageaufwand erfordert. Darüber hinaus werden auch die Kosten der erfindungsgemäßen Prozeßapparatur gesenkt, da auf aufwendige und kostenintensive Aufnahmeplatten für die mehreren herkömmlichen Filterpatronen in der Prozeßapparatur verzichtet werden kann.

In einer weiteren bevorzugten Ausgestaltung ist, falls das Filter mittig eine Öffnung aufweist, in der Öffnung des Filters ein angetriebenes Mittel zum Rütteln des Filters angeordnet.

Diese Maßnahme hat den Vorteil, daß eine konstruktiv einfache und vor allem kontinuierlich wirkende Abreinigungsmöglichkeit für das Filter geschaffen wird. Zusätzlich zu der bereits geringeren Anhaftungstendenz des partikelförmigen Gutes an dem Filter wird durch das Mittel zum Rütteln des Filters die Anhaftungstendenz weiter reduziert, weil das gerüttelte Filter einen Teil der Partikel in den Prozeßraum zurückstößt, wodurch eine während des Prozesses ausreichende Abreinigung und Rückführung von groben und im wesentlichen nicht klebrigen Partikeln in zufriedenstellendem Maße erzielt wird. Der Antrieb des Mittels zum Rütteln ist bevorzugt elektrisch oder pneumatisch.

In einer weiteren bevorzugten Ausgestaltung weist die Filtereinrichtung eine umfängliche erste Dichtung zum Abdichten eines Außenumfangs des Filters gegen eine Innenwand der Prozeßapparatur auf, wobei die Dichtung von dem Filter abnehmbar ist.

Diese Maßnahme hat den Vorteil, daß nach Beendigung eines Prozesses die Dichtung von dem Filter abgenommen werden kann, wodurch sich das Filter einfacher und schneller ein- und ausbauen und reinigen läßt.

In einer weiteren bevorzugten Ausgestaltung weist in dem Fall, daß das Filter mittig eine Öffnung aufweist, die Filtereinrichtung eine umfängliche zweite Dichtung zum Abdichten eines Innenumfangs des zumindest einen Filters auf, wobei die Dichtung von dem Filter abnehmbar ist.

Auch diese Maßnahme hat den Vorteil, daß nach Beendigung eines Prozesses der Filterkörper vollkommen freigelegt werden kann, wodurch die Reinigungseigenschaften des Filters weiter verbessert sind.

In einer weiteren bevorzugten Ausgestaltung ist die erste Dichtung und/oder die zweite Dichtung radial elastisch dehnbar und weist einen mit Druckluft beaufschlagbaren Hohlraum auf.

Diese Maßnahme hat den Vorteil, daß durch die pneumatisch wirkende Dichtung einerseits eine hohe Dichtwirkung zwischen dem Filter und der Innenwand der Prozeßapparatur erreicht wird, weil die Dichtung mit entsprechend hohem Druck an die Innenwand einerseits und an das Filter andererseits angepreßt werden kann. Andererseits ermöglicht eine derartige pneumatische Dichtung eine rasche und einfache Montage und Demontage des Filters in der Prozeßapparatur. Durch Beaufschlagen des Hohlraumes der Dichtung mit Druckluft dehnt sich die erste bzw. die zweite Dichtung elastisch radial aus und preßt sich an den Außenumfang bzw. den Innenumfang des Filters einerseits und an die Innenwand der Prozeßapparatur bzw. an den Deckel im Zentrum des Filters andererseits. Zum Ausbauen des Filters wird der Druck in dem Hohlraum der ersten bzw. der zweiten Dichtung entspannt, wodurch sich die Dichtung wieder elastisch zusammenzieht und von dem Filter abgenommen werden kann.

In einer weiteren bevorzugten Ausgestaltung weist die erste Dichtung und/oder die zweite Dichtung eine umfängliche Trennungsfuge auf, die eine vertikale Verschiebung des Filters bei Überschreiten eines Schwellwertes einer vertikal wirkenden Kraft ermöglicht.

Diese Maßnahme hat den Vorteil, daß im Falle einer Verpuffung der Prozeßluft in der Prozeßkammer der dabei entstehenden energiereichen Druckwelle durch vertikales Ausweichen des Filters die Energie entzogen werden kann, wodurch ein Bersten der Prozeßapparatur und damit eine Gefährdung des Bedienungspersonals vermieden werden kann.

In einer weiteren bevorzugten Ausgestaltung der Prozeßapparatur weist die Filtereinrichtung radial verfahrbare Befestigungselemente zum Befestigen des Filters in der Prozeßapparatur auf.

Durch diese Maßnahme wird die Bedienungsfreundlichkeit der erfindungsgemäßen Prozeßapparatur beim Ein- und Ausbauen des Filters weiter verbessert. An der Innenwand der Prozeßapparatur können beispielsweise drei bis sechs umfänglich verteilte derartige Befestigungselemente vorgesehen sein, die bevorzugt über eine pneumatische Steuerung radial verfahrbar sind, wobei die Befestigungselemente bevorzugt als Auflageelemente ausgebildet sind.

In einer weiteren bevorzugten Ausgestaltung ist über dem Filter ein Mittel zum Abreinigen des partikelförmigen Guts von dem Filter während eines Prozesses angeordnet.

Diese Maßnahme ist insbesondere dann von Vorteil, wenn in der Prozeßluft sehr feine, insbesondere klebrige oder feuchte Partikel enthalten sind, die eine höhere Anhaftungstendenz an dem Filter besitzen. Das Mittel zum Abreinigen des partikelförmigen Guts während des Prozesses ermöglicht eine verbesserte Rückführung des Guts in den Prozeßraum.

Dabei ist es bevorzugt, wenn das Mittel zum Abreinigen zumindest einen in Rotation versetzbaren, mit Druckluft beaufschlagbaren Arm aufweist, dessen Länge in etwa der radialen Ausdehnung der Filterflächen entspricht, und der auf seiner Unterseite zumindest eine Luftaustrittsdüse aufweist.

Diese Maßnahme hat den Vorteil, daß während des laufenden Prozesses eine kontinuierliche Abreinigung des Filters erreicht werden kann, ohne daß der von unten nach oben durch das Filter gerichtete Prozeßluftstrom für den Abreinigungsvorgang unterbrochen werden muß. Bei der bekannten Prozeßapparatur hingegen werden zum Abreinigen der Filtersäcke turnusmäßig jeweils eine Teilanzahl der Filterpatronen für von der Prozeßkammer kommende Prozeßluftströmung gesperrt und in entgegengesetzter Richtung von einem Reinigungsgas durchströmt. Der Arm ist vorzugsweise so ausgebildet, daß er ein Paar Filterflächen des Filters überdeckt, so daß stets ein Großteil der Filterflächen von Prozeßluft durchströmt bleibt.

In einer alternativen bevorzugten Ausgestaltung weist das Mittel zum Abreinigen zumindest einen in Rotation versetzbaren Arm auf, der ein solches Profil aufweist, daß durch Rotation des Armes eine nach unten gerichtete Druckwelle erzeugt wird.

Diese Maßnahme hat nun den erheblichen Vorteil, daß zur Abreinigung des partikelförmigen Gutes von dem Filter keine Fremdluft, wie beispielsweise ein Reinigungsgas, benötigt wird. Vielmehr wird zwischen dem zumindest einen Arm, der beispielsweise die Form eines schräggestellten Rotorblattes aufweist, und der Oberseite des Filters beim Umlaufen des Armes eine Druckwelle erzeugt, die die durch das Filter durchgehende Prozeßluftströmung kontinuierlich umlaufend umkehrt. Dadurch, daß bei dieser Art der Abreinigung auf die Zuführung von Reinigungsfremdluft verzichtet wird, werden auf vorteilhafte Weise Kontaminationen des in der Prozeßkammer zu behandelnden partikelförmigen Gutes vermieden. Darüber hinaus werden die Kosten der erfindungsgemäßen Prozeßapparatur weiterhin gesenkt, weil auf kostenaufwendige Aufbereitungsanlagen für die Reinigungsluft verzichtet werden kann.

In einer weiteren bevorzugten Ausgestaltung ist über dem Filter ein Mittel zum Waschen des Filters mit einer Waschflüssigkeit angeordnet.

Diese Maßnahme hat den Vorteil, daß das Filter zum Waschen zwischen zwei Prozessen, besonders solchen, in denen das gleiche partikelförmige Gut behandelt wird, nicht ausgebaut werden muß, sondern in situ in der Apparatur gewaschen werden kann. Dazu reicht es aus, daß die vorstehend erwähnten Dichtungen zum Waschen des Filters von dem Filter abgenommen werden, um auch eine Reinigung des Filters an den äußeren Endkanten der Filterflächen zu ermöglichen. Die Wascheinrichtung kann auch einfach dazu dienen, das staubartige partikelförmige Gut vor dem Ausbau des Filters an dem Filter besser zu binden, so daß das Gut beim Ausbau nicht unerwünscht abfällt, und die Bedienungsperson dabei mit dem Gut in Berührung kommt.

Dabei ist es bevorzugt, wenn das Mittel zum Waschen einen in Rotation versetzbaren Sprüharm aufweist, der auf seiner Unterseite zumindest einen Auslaß für die Waschflüssigkeit aufweist.

Diese Maßnahme hat den Vorteil, daß das Mittel zum Waschen konstruktiv einfach und kostengünstig hergestellt werden kann. Der Auslaß kann dabei so ausgestaltet sein, daß das Filter wahlweise mit einem Flüssigkeitsstrahl, -sprühnebel oder mit einem Flüssigkeitsschwall gewaschen werden kann.

In einer weiteren bevorzugten Ausgestaltung ist das Mittel zum Waschen in dem Mittel zum Abreinigen integriert.

Diese Maßnahme hat zum einen den Vorteil, daß der Raumbedarf für das Mittel zum Abreinigen und das Mittel zum Waschen gering ist, wodurch über dem Filter nur geringe Strömungshindernisse für den Prozeßluftstrom vorhanden sind. Ein weiterer Vorteil besteht darin, daß der zumindest eine Sprüharm des Mittels zum Waschen für die innere Reinigung des Mittels zum Abreinigen eingesetzt werden kann. Ein noch weiterer Vorteil besteht darin, daß für beide vorgenannten Mittel nur ein Antrieb erforderlich ist.

Weitere Vorteile ergeben sich aus der nachfolgenden Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden hiernach mit Bezug auf die Zeichnung näher beschrieben. Es zeigen:
- Fig. 1: eine Prozeßapparatur im Bereich einer Filtereinrichtung in einem vertikalen Längsschnitt;
- Fig. 2: ein Filter der Filtereinrichtung der Prozeßapparatur in Fig. 1 in Alleinstellung in Seitenansicht;
- Fig. 3: das Filter in Fig. 2 mit am Außenumfang des Filters angebrachten Ringen zur Formstabilisierung des Filters;
- Fig. 4: einen Schnitt durch das Filter in Fig. 3 entlang der Linie IV-IV in Fig. 3;
- Fig. 5: eine Darstellung eines Ausschnitts des Filters, der vier nebeneinander angeordnete Filterflächen mit Blick auf den Außenumfang des Filters in der linken Hälfte in Fig. 5 und mit Blick auf den Innenumfang in der rechten Hälfte in Fig. 5 jeweils in einer in einer Ebene abgewickelten Darstellung zeigt;
- Fig. 6: eine der Fig. 5 entsprechende Darstellung eines gegenüber Fig. 5 geringfügig abgewandelten Ausführungsbeispiels des Filters;
- Fig. 7: eine Draufsicht auf eine entlang einer Linie VI-VI abgeschnittene Hälfte des Filters, wobei eine erste Dichtung und eine zweite Dichtung an dem Filter vorgesehen ist;
- Fig.8: eine Schnittdarstellung des Filters entlang der Linie VI-VI mit den vorgenannten Dichtungen;
- Fig. 9: eine unterbrochene Detaildarstellung des Filters in Fig. 8, die die erste Dichtung und die zweite Dichtung im Detail zeigt;
- Fig. 10: ein weiteres Ausführungsbeispiel einer Prozeßapparatur, in der das Filter verwendet wird, wobei die Filtereinrichtung dieser Prozeßapparatur weiterhin ein Mittel zum Abreinigen des Filters aufweist; und
- Fig. 11: noch ein weiteres Ausführungsbeispiel einer Prozeßapparatur, deren Filtereinrichtung ein gegenüber Fig. 10 abgewandeltes Mittel zum Abreinigen und zusätzlich ein Mittel zum Waschen des Filters aufweist.

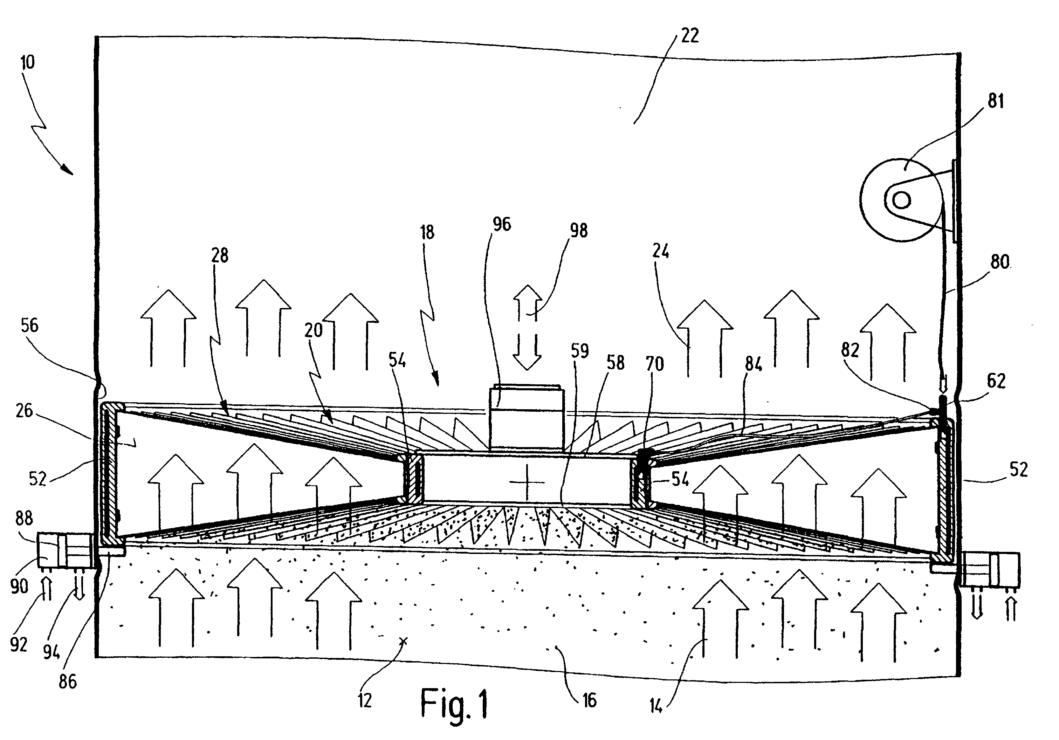

In Fig. 1 ist eine mit dem allgemeinen Bezugszeichen 10 versehene Prozeßapparatur ausschnittsweise dargestellt. Die Prozeßapparatur 10 ist beispielsweise eine Coating- oder Granulierapparatur. Die Prozeßapparatur 10 ist insgesamt im wesentlichen zylindrisch.

Die Prozeßapparatur 10 weist eine Prozeßkammer 12 auf, in der eine Prozeßluft 14 in im wesentlichen vertikaler Richtung strömt. Die Prozeßluft 14 enthält ein partikelförmiges Gut 16, das mittels der strömenden Prozeßluft 14 in der Prozeßkammer 12 bewegt wird und dabei einem Behandlungsprozeß unterworfen wird. Der Behandlungsprozeß findet im wesentlichen in einem in Fig. 1 nicht mehr dargestellten unteren Bereich statt, während Fig. 1 den oberen Bereich der Prozeßkammer 12 zeigt.

Im Falle, daß die Prozeßapparatur 10 eine Granulierapparatur ist, wird das aus feinsten Teilchen bestehende partikelförmige Gut 16 in der Prozeßkammer 12 zu größeren Partikeln agglomeriert, wobei das partikelförmige Gut 16 dazu mit einer fein versprühten Flüssigkeit behandelt wird, die die Agglomeration der einzelnen Teilchen begünstigt.

Im Falle, daß die Prozeßapparatur 10 eine Coating-Apparatur ist, wird mittels einer versprühten Flüssigkeit in der Prozeßkammer 12 ein Oberflächenüberzug auf dem in der Prozeßkammer 12 mittels der Prozeßluft 14 bewegten partikelförmigen Gut 16 gebildet.

Die Prozeßapparatur 10 weist eine Filtereinrichtung 18 auf, die ein Filter 20 aufweist, durch das die Prozeßluft 14 nach oben strömt und nach Durchströmen des Filters 20 in einen Abluftraum 22 als gefilterte Reinluft strömt. Beim Durchtritt der Prozeßluft 14 durch das Filter 20 wird das partikelförmige Gut 16 durch das Filter 20 in der Prozeßkammer 12 zurückgehalten.

Wie aus Fig. 1 hervorgeht, weist die Prozeßapparatur 10 nur ein derartiges Filter 20 auf, wobei der Durchmesser des Filters 20 dem Durchmesser der Prozeßkammer 12 entspricht. Weiterhin ist das Filter 20 als Ganzes flachbauend in der Prozeßapparatur 10 angeordnet. Das Filter 20 nimmt dadurch einen größeren Abstand von dem in Fig. 1 nicht mehr zu sehenden Boden der Prozeßkammer 12 ein. Im nicht mehr dargestellten unteren Bereich der Prozeßkammer 12 ist die Prozeßluft 14 verwirbelt, während sie im Bereich nahe bei dem Filter 20 im wesentlichen laminar ist, so daß das partikelförmige Gut 16 in diesem Bereich einen geringeren Aufrieb besitzt als im unteren Bereich.

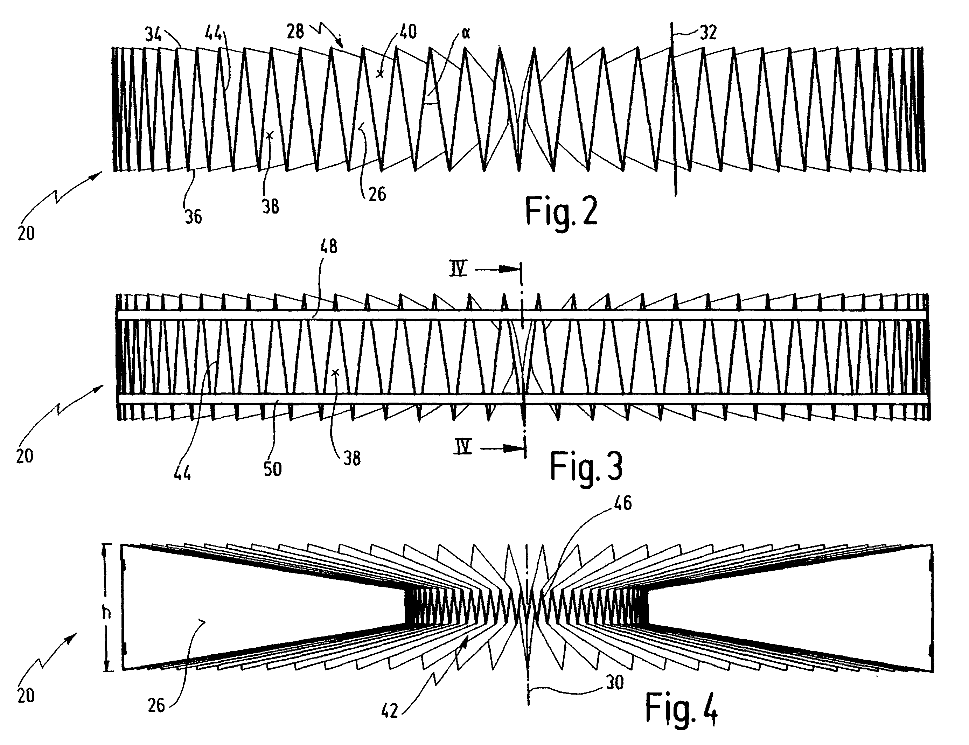

Im folgenden wird an Hand der Figuren 2 bis 9 zunächst das Filter 20 genauer beschrieben.

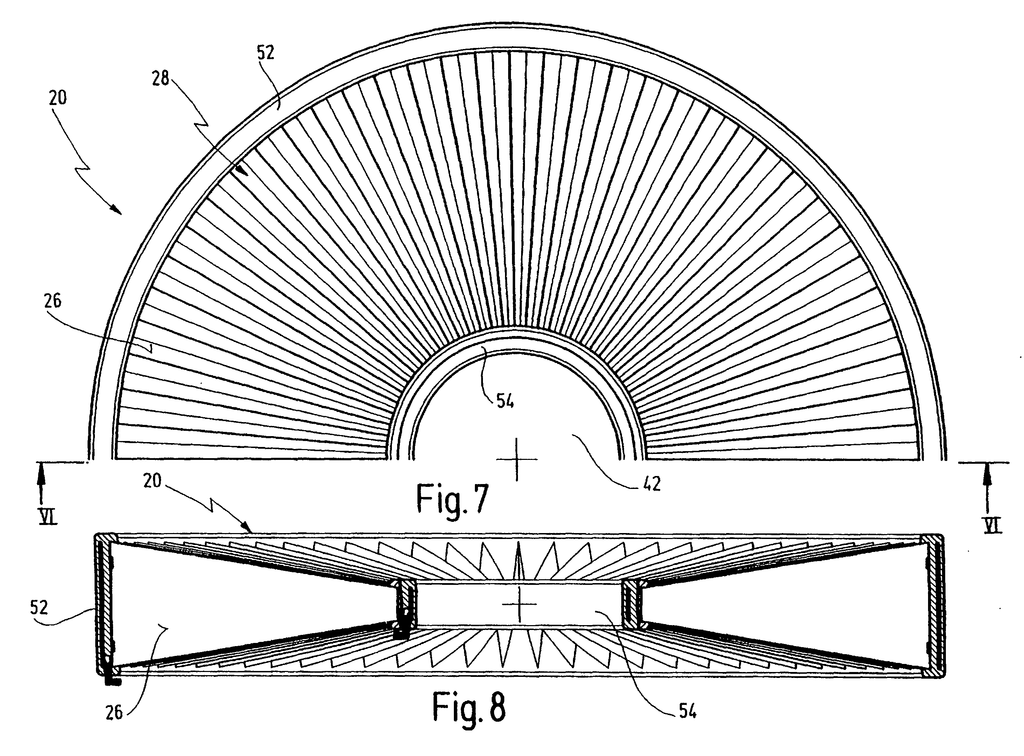

Das Filter 20 weist eine Vielzahl von Filterflächen 26 auf. Die Filterflächen 26 sind zu einem im wesentlichen kreisförmigen Filterkörper 28 (vergl. Fig. 7) aneinandergereiht. Jede der Filterflächen 26 erstreckt sich im wesentlichen radial bezüglich einer vertikalen Mittelachse 30 des Filters 20.

Die einzelnen Filterflächen 26 bilden zusammen eine mäanderförmige Geometrie des Filterkörpers 28, in der sie bezüglich einer Vertikalen 32 geneigt sind, die zur Richtung der Schwerkraft und zur Strömungsrichtung der Prozeßluft 14 im wesentlichen parallel verläuft.

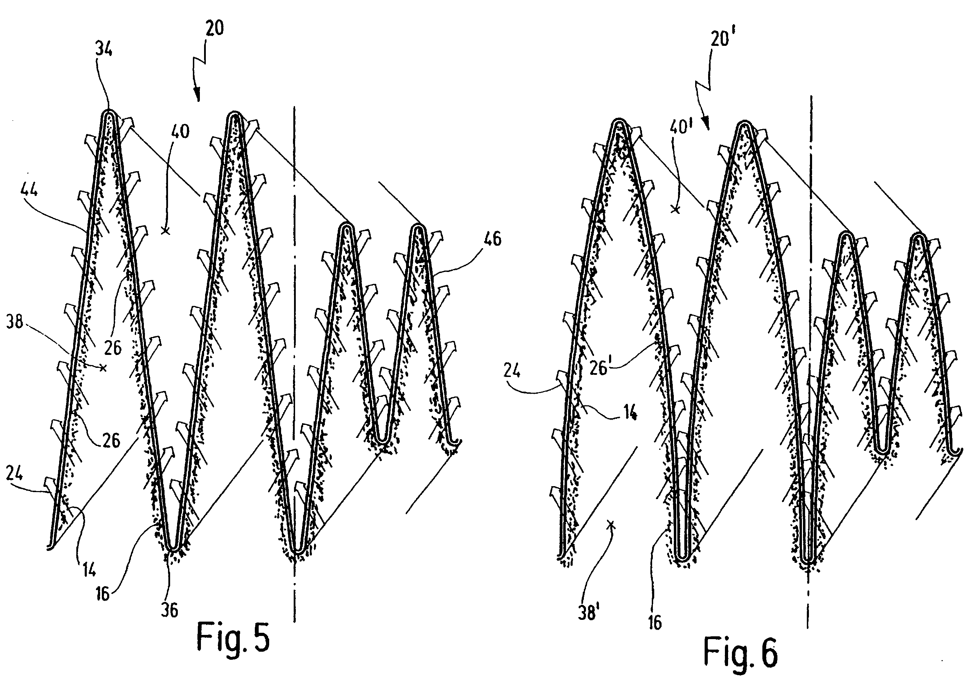

Obere Faltkanten 34 und untere Faltkanten 36 des Filters 20, an denen die einzelnen Filterflächen 26 jeweils paarweise miteinander verbunden sind, sind gerundet ausgebildet, wie in Fig. 5 dargestellt ist.

Der Filterkörper 28 weist somit insgesamt eine durch die Anordnung der Filterflächen 26 vorgegebene Mäanderstruktur auf. Die Filterflächen 26 und damit der Filterkörper 28 sind aus demselben Werkstoff gefertigt, im vorliegenden Fall aus einem metallischen Mehrschichtgewebe. Der mäanderförmige Filterkörper 28 wird hergestellt, indem ein kreisförmiger Rohling entlang radialer Faltlinien, die dann die oberen Faltkanten 34 und die unteren Faltkanten 36 bilden, gefaltet wird. Fünf bis acht derartig gefalteter Rohlinge werden dann zu dem kreisförmigen Filterkörper 28 nebeneinander angeordnet und an den Verbindungsstellen miteinander verklebt oder verschweißt.

Wie aus Fig. 4 hervorgeht, verjüngt sich jede Filterfläche 26 in radialer Richtung von außen nach innen strahlenförmig, so daß jede einzelne Filterfläche 26 in etwa die Form eines Trapezes aufweist, dessen Symmetrieachse im wesentlichen horizontal verläuft.

Ein Verhältnis aus einer Höhe h und der radialen Ausdehnung der Filterflächen 26 ist dabei kleiner als 1 und liegt im Bereich von etwa 0,1 bis 0,5. Das Filter 20 weist somit insgesamt eine geringe Bauhöhe auf und nimmt in der Prozeßapparatur 10 in Fig. 1 einen entsprechend geringen vertikalen Raum ein. Das Filter 20 taucht somit auch nur mit sehr geringer Tiefe in die Prozeßkammer 12 der Prozeßapparatur 10 in Fig. 1 ein.

Dadurch, daß sich die einzelnen Filterflächen 26 in radialer Richtung von außen nach innen strahlenförmig verjüngen, ist ein Neigungswinkel α (Fig. 2) zwischen jeweils zwei benachbarten Filterflächen 26 über die radiale Ausdehnung der Filterflächen 26 hinweg im wesentlichen konstant, so daß die einzelnen Filterflächen 26 in radialer Richtung eben und verwindungsfrei sind.

Zwischen jeweils zwei benachbarten Filterflächen 26 wird ein der das partikelförmige Gut 16 enthaltenden Prozeßluft 14 zugewandter Zwischenraum 38 und ein dem Abluftraum 22 zugewandter Zwischenraum 40 gebildet.

Jeder Zwischenraum 38 weist aufgrund der mäanderförmigen Struktur des Filterkörpers 28 in etwa eine V-förmige, kavernen- oder steildachartige Querschnittsform auf.

Bei einem in Fig. 6 dargestellten geringfügig abgewandelten Ausführungsbeispiel eines Filters 20' sind Filterflächen 26' in Strömungsrichtung der Prozeßluft 14 gesehen konkav gekrümmt ausgebildet, so daß ein prozeßluftseitiger Zwischenraum 38' gegenüber einem reinluftseitigen Zwischenraum 40' im Querschnitt vergrößert ist. Durch diese Ausgestaltung der Filterflächen 26' wird die Strömungsgeschwindigkeit der Prozeßluft 14 in den Zwischenräumen 38' gegenüber den Zwischenräumen 38 in Figuren 2 bis 5 reduziert, wodurch das partikelförmige Gut 16 mit geringerer Geschwindigkeit gegen die Filterflächen 26' geschleudert wird und somit nur ein geringerer Anteil des partikelförmigen Gutes 16 an den Filterflächen 26' anhaftet.

Wie am deutlichsten aus Fig. 7 hervorgeht, weist das Filter 20 mittig eine Öffnung 42 auf, die im Betrieb der Prozeßapparatur 10 geeigneterweise verschlossen ist, wie hiernach noch näher beschrieben wird.

Die Zwischenräume 38 bzw. 40 zwischen den jeweils benachbarten Filterflächen 26 und ebenso die Zwischenräume 38' bzw. 40' des Filter 20' in Fig. 6 sind sowohl am äußeren Umfang, d.h. an äußeren Endkanten 44, als auch am inneren Umfang, d.h. an inneren Endkanten 46, (vergl. Fig. 4) radial offen.

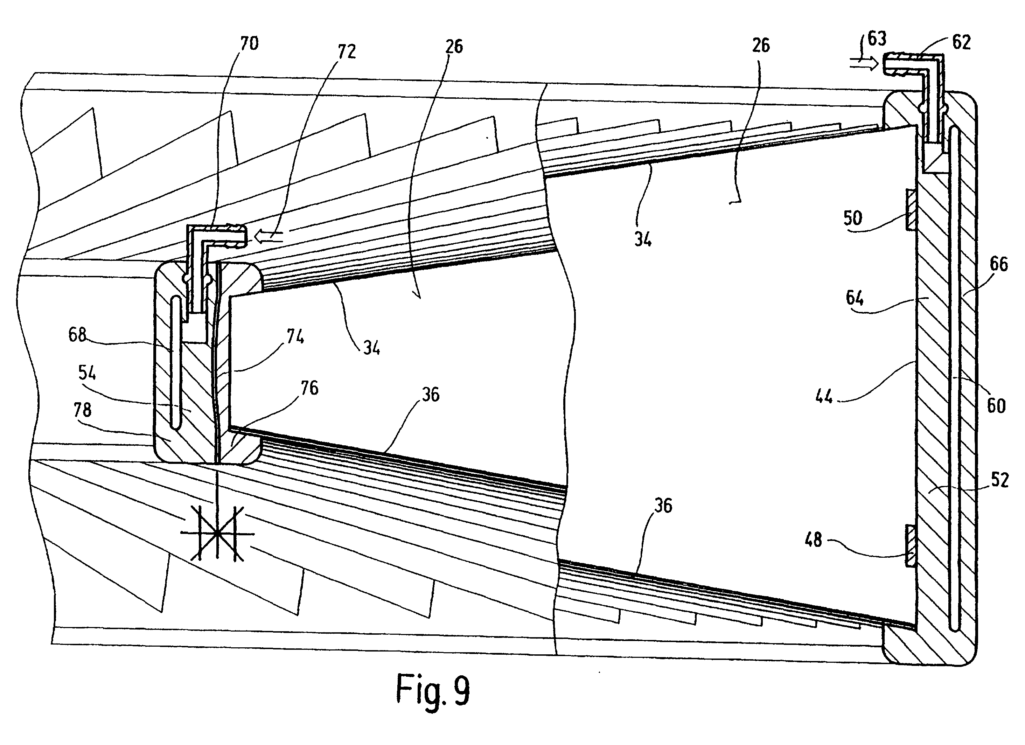

Die Endkanten 44 am Außenumfang des Filters 20 sind durch zwei schmale in Form von Ringbändern ausgebildete Ringe 48 und 50 miteinander verbunden, wobei die Ringe 48 und 50 im Vergleich zur Höhe h der Filterflächen 26 eine geringe Breite aufweisen. Die Ringe 48 bzw. 50 sind mit den Endkanten 44 der Filterflächen 26 verklebt oder verschweißt, je nachdem, welches Material für die Filterflächen 26 verwendet wird. Wie aus Fig. 9 hervorgeht, sind dazu ferner in den Filterflächen 26 im Bereich deren Endkanten 44 Ausnehmungen vorgesehen, in die der erste Ring 48 und der zweite Ring 50 eingelassen sind, so daß die Endkanten 44 zusammen mit dem Ring 48 bzw. 50 einen glatten Abschluß bilden.

In Figuren 7 bis 9 ist das Filter 20 mit einer ersten Dichtung 52 und einer zweiten Dichtung 54, die jeweils von dem Filterkörper 28 abnehmbar sind, dargestellt.

Die erste Dichtung 52 umgibt den Filterkörper 28 an dessen Außenumfang vollumfänglich, während die Dichtung 54 den Filterkörper 28 an dem durch die Öffnung 42 gebildeten Innendurchmesser vollumfänglich umgibt.

Die erste Dichtung 52 dient dazu, das Filter 20 gegen eine Innenwand 56 der Prozeßapparatur 10 im eingebauten Zustand des Filters 20 abzudichten. Die zweite Dichtung 54 dient dazu, den Filterkörper 28 gegen einen in der Öffnung 42 angebrachten Verschlußdeckel mit einer oberen Verschlußplatte 58 und einer unteren Verschlußplatte 59 (vergl. Fig. 1) abzudichten.

Die erste Dichtung 52 und die zweite Dichtung 54 bestehen aus einem elastischen Material, das für Dichtungszwecke geeignet ist. Die erste Dichtung 52 und die zweite Dichtung 54 sind ferner radial elastisch dehnbar.

Dazu weist die erste Dichtung 52 einen Hohlraum 60 auf, der in der ersten Dichtung 52 vollumfänglich verläuft, und der über einen Druckluftanschluß 62 mit Druckluft beaufschlagbar ist. Wird der Hohlraum 60 mit Druckluft beaufschlagt, so spreizen sich ein radial innerer Abschnitt 64 und ein radial äußerer Abschnitt 66 radial auseinander, wodurch der radial äußere Abschnitt 66 gegen die Innenwand 56 der Prozeßapparatur 10 gedrückt wird, während der radial innere Abschnitt 64 gegen die Endkanten 44 der Filterflächen 26 gepreßt wird. Wird die Druckluft aus dem Hohlraum 60 entgegen dem Pfeil 63 abgelassen bzw. entspannt, zieht sich die erste Dichtung 52 wieder zusammen, wonach sie von dem Filter 20 abnehmbar ist.

Entsprechend weist die zweite Dichtung 54 einen in der zweiten Dichtung 54 umfänglich verlaufenden Hohlraum 68 auf, der über einen Druckluftanschluß 70 gemäß einem Pfeil 72 mit Druckluft beaufschlagbar ist.

Die zweite Dichtung 54 weist ferner eine Trennungsfuge 74 auf, die durch die zweite Dichtung 54 über den gesamten Umfang der zweiten Dichtung 54 von unten nach oben durchgeht und die zweite Dichtung 54 in zwei formschlüssig aneinander liegende Abschnitte 76 und 78 unterteilt.

Im Falle einer Verpuffung der Prozeßluft 14 in der Prozeßkammer 12 in Fig. 1 kann sich das Filter 20 entlang der Trennungsfuge 54 in den Abluftraum 22 hinein verschieben, wodurch ein Teil der bei der Verpuffung frei werdenden Energie durch die Verschiebung des Filters 20 gedämpft werden kann. Die Trennungsfuge 74 wirkt somit als Sollbruchstelle im Gefahrenfall.

Aus Fig. 9 geht noch hervor, daß die erste Dichtung 52 und die zweite Dichtung 54 die oberen Faltkanten 34 und die unteren Faltkanten 36 in radialer Richtung teilweise übergreifen.

Wieder mit Bezug auf Fig. 1 weist die Prozeßapparatur 10 einen Druckluftschlauch 80 auf, der an die Druckluftanschlüsse 62 der ersten Dichtung 52 zur Beaufschlagung des Hohlraumes 60 der ersten Dichtung 52 anschließbar ist. Für den Druckluftschlauch 80 ist ferner eine selbst aufwickelnde Spule 81 in der Prozeßapparatur 10 angeordnet, die den Druckluftschlauch 80 stets unter einer geeigneten Spannung hält. Der Druckluftanschluß 62 der ersten Dichtung 52 weist eine Abzweigung 82 auf, von der ein Druckluftverbindungsschlauch 84 zu dem Druckluftanschluß 70 der zweiten Dichtung 54 führt, so daß die erste Dichtung 52 und die zweite Dichtung 54 jeweils zusammen mit Druck beaufschlagt werden können.

Die Filtereinrichtung 18 weist zur Befestigung des Filters 20 in der Prozeßapparatur 10 radial verfahrbare Befestigungselemente 86 in Form von Auflagern auf. Das Filter 20 liegt in der Prozeßapparatur 10 auf den Befestigungselementen 86 auf. Die Befestigungselemente 86, von denen in der Prozeßapparatur 10 umfänglich verteilt drei bis sechs Stück vorgesehen sind, sind pneumatisch oder hydraulisch betätigbar. Dazu ist jedes Befestigungselement 86 mit einem Stempel außerhalb der Prozeßapparatur 10 verbunden, der in einer Druckkammer 90 angeordnet ist, die gemäß einem Pfeil 92 mit Druckluft oder Hydraulikflüssigkeit beaufschlagbar bzw. gemäß einem Pfeil 94 entspannbar ist. Zum Ausbauen des Filters 20 werden die Befestigungselemente 86 radial nach außen zurückgezogen, wodurch das Filter 20 durch eine nicht dargestellte Hub- und Montagevorrichtung nach unten abgelassen werden kann.

Gemäß Fig. 1 ist in der Öffnung 42 in der Mitte des Filters 20 ein Mittel 96 zum Rütteln des Filters 20 angeordnet, wobei das Mittel 96 zum Rütteln des Filters 20 über einen elektrischen oder pneumatischen Antrieb gemäß einem Doppelpfeil 98 vertikal hin- und hergehende Vibrationen erzeugt, die von der Verschlußplatte 58 auf das Filter 20 übertragen werden. Durch die Vibrationen des Filters 20 wird die Anhaftungstendenz des partikelförmigen Gutes 16 an den Filterflächen 26 des Filters 20 vermindert, und gleichzeitig wird bereits an den Filterflächen 26 anhaftendes partikelförmiges Gut 16 von diesem abgeschüttelt, das somit wieder in die Prozeßkammer 12 zurückfällt.

Bei einem weiteren Ausführungsbeispiel weist die Prozeßapparatur 10 eine Filtereinrichtung 110 auf, die den Filter 20 mit der ersten Dichtung 52 und der zweiten Dichtung 54 und den Befestigungselementen 86 aufweist.

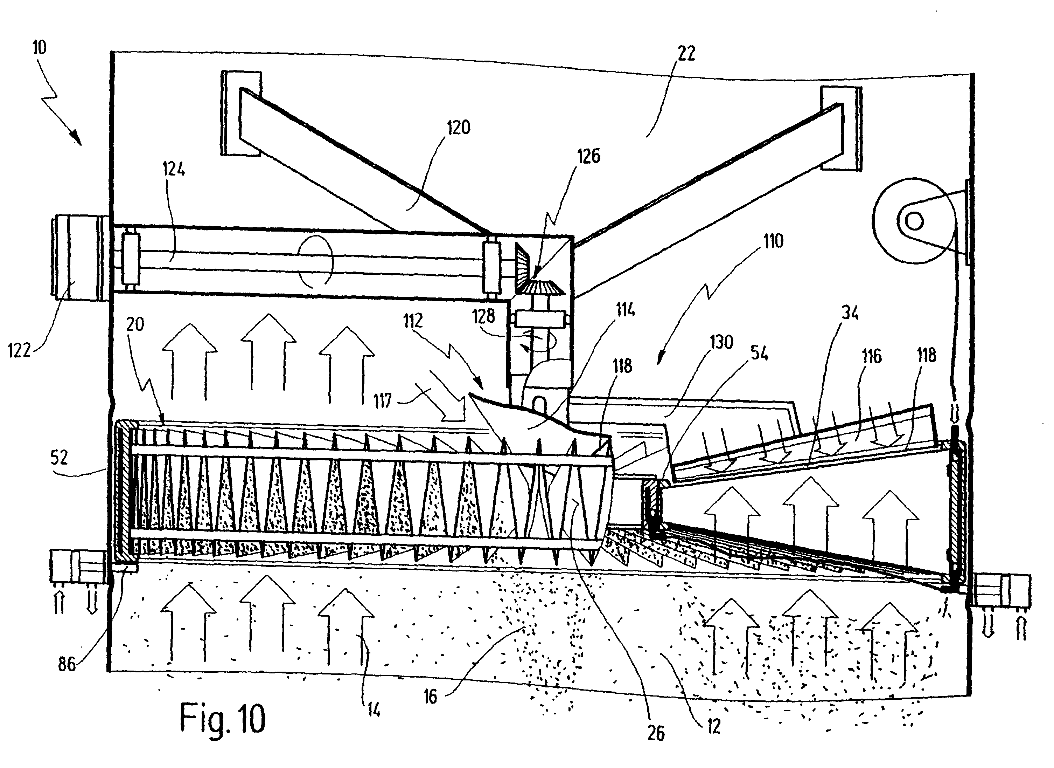

An Stelle des Mittels 98 zum Rütteln des Filters 20 gemäß Fig. 1 weist die Filtereinrichtung 110 ein Mittel 112 zum Abreinigen des Filters 20 auf, das oberhalb des Filters 20, d.h. in dem Abluftraum 22, angeordnet ist. Das Mittel 112 zum Abreinigen des Filters 20 weist vier umfänglich gleich verteilt angeordnete Arme auf, von denen in Fig. 10 ein Arm 114 in Vorderansicht und ein Arm 116 in Seitenansicht zu sehen sind. Die Arme 114 bzw. 116 weisen ein derartiges Profil auf, daß sie beim Umlaufen über dem Filter 20 zwischen sich und der Oberseite des Filters 20 eine Druckwelle 117 erzeugen, die die Strömung der Prozeßluft 14 jeweils unter den Armen 114 bzw. 116 in der Richtung umkehren, wobei die dadurch erzeugte Gegenströmung der Prozeßluft 14 das partikelförmige Gut 16 von den Filterflächen 26 in die Prozeßkammer 12 zurück abbläst. Die Arme 114 bzw. 116 weisen in etwa das Profil eines schräggestellten Rotorblattes auf. Eine untere Kante 118 der Arme 114 bzw. 116 fährt dabei dicht aber berührungslos über die oberen Faltkanten 34 des Filters 20.

Das Mittel 112 zum Abreinigen des Filters 20 ist mittels eines Stativs 120 in der Prozeßapparatur 10 montiert. Der Antrieb der Arme 114 bzw. 116 erfolgt über einen externen Motor 122, dessen Abtriebswelle 124 über ein Getriebe 126 in Form eines Kegel- oder Stirnradgetriebes mit einer Antriebswelle 128 verbunden ist, mit der ein Tragarm 130 verbunden ist, an dem der Arm 116 befestigt ist.

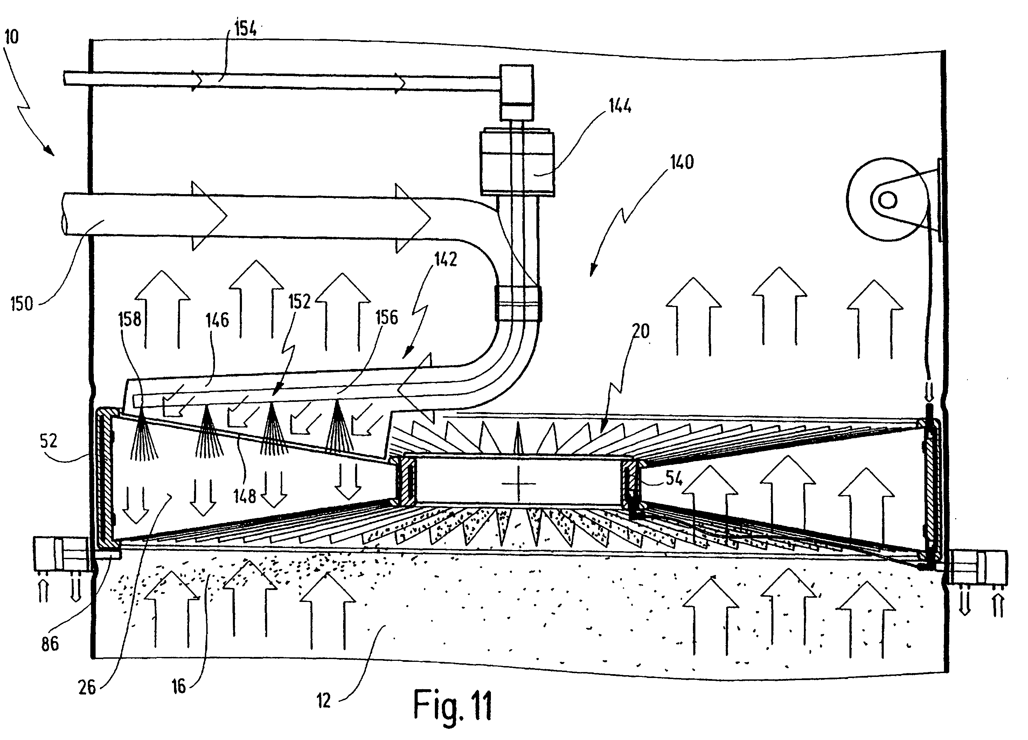

In Fig. 11 ist in einem weiteren Ausführungsbeispiel eine Filtereinrichtung 140 dargestellt, die ebenfalls das Filter 20 in Fig. 1 bzw. 10 mit der ersten Dichtung 52, der zweiten Dichtung 54 und den Befestigungselementen 86 aufweist. Die Filtereinrichtung 140 weist ein Mittel 142 zum Abreinigen des Filter 20 auf, das im Unterschied zu dem Mittel 112 mit externer Reinigungsluft betrieben wird.

Das Mittel 142 zum Abreinigen des Filters 20 weist dazu einen über einen Motor 144 in Rotation versetzbaren Arm 146 auf, dessen untere Kante eine Austrittsöffnung für die Reinigungsluft aufweist. Diese Austrittsöffnung erstreckt sich im wesentlichen über die gesamte radiale Ausdehnung der unteren Kante 48 in Form eines Spaltes. Die Reinigungsluft wird über einen Zuführkanal 150 von einer externen Quelle (nicht dargestellt) zugeführt. Mittels der durch den Zuführkanal 150 zugeführten und durch die Austrittsöffnung im Bereich der unteren Kante 148 des Armes 146 austretenden Reinigungsluft wird das partikelförmige Gut 16 von den Filterflächen 26 in die Prozeßkammer 12 zurück abgeblasen.

Ferner weist die Filtereinrichtung 140 ein Mittel 152 zum Waschen des Filters 20 nach Beendigung eines Prozesses auf. Das Mittel 152 zum Waschen des Filters 20 nach Beendigung des Prozesses ist dabei in dem Mittel 142 zum Abreinigen des Filters 20 während des Prozesses integriert.

Das Mittel 152 zum Waschen des Filters 120 weist dazu eine Zuführleitung 154 für eine Waschflüssigkeit auf, die mit einem Sprüharm 156 verbunden ist, wobei der Sprüharm 156 in dem Arm 146 des Mittels 142 zum Abreinigen des Filters 20 integriert ist. Der Sprüharm 156 rotiert daher zusammen mit dem Arm 146, so daß für diese Anordnung nur ein Antrieb erforderlich ist, nämlich der Motor 144.

Auf seiner Unterseite weist der Sprüharm 156 zumindest einen Auslaß 158, im Ausführungsbeispiel der Fig. 11 insgesamt vier Auslässe 158 auf.

Nach Beendigung eines in der Prozeßapparatur 10 gefahrenen Prozesses kann das Filter 20 mit der aus den Auslässen 158 austretenden Waschflüssigkeit befeuchtet werden, um das an den Filterflächen 26 haftende partikelförmige Gut 16 an den Filterflächen 26 zu binden, so daß das partikelförmige Gut 16 während des Ausbauens des Filters nicht abfällt und die Bedienungsperson damit in Berührung kommt.

Das Mittel 152 zum Waschen des Filters 20 bzw. die Auslässe 158 des Sprüharmes 156 können jedoch auch so ausgebildet sein, daß die Waschflüssigkeit mit Druck aus dem Sprüharm 156 austritt, so daß das Filter 20 in der Prozeßapparatur 10 einer Reinigung durch Abspritzen oder mittels eines Waschflüssigkeitsschwalls unterzogen werden kann. Damit kann eine ausreichende Reinigung des Filters 20 zwischen zwei aufeinanderfolgenden Prozessen erreicht werden, zumindest dann, wenn in den beiden aufeinanderfolgenden Prozessen jeweils das gleiche partikelförmige Gut behandelt wird.

Das Mittel 15 zum Waschen kann selbstverständlich auch mit dem Mittel 112 zum Abreinigen in Fig. 10 kombiniert werden, wobei in den Armen 114, 116 eine entsprechende Sprüheinrichtung für Waschflüssigkeit integriert wird.

## Patentansprüche

1. Prozeßapparatur, insbesondere Granulier- oder Coatingapparatur, mit einer über oder neben einer Prozeßkammer (12) angeordneten Filtereinrichtung (18) zum Entstauben von ein partikelförmiges Gut (16) enthaltender Prozeßluft (14), wobei die Filtereinrichtung (18) zumindest ein Filter (20; 20') aufweist, das von der Prozeßluft (14) von der Prozeßkammer (12) kommend durchströmt wird, **dadurch gekennzeichnet, daß** das Filter (20; 20') eine Vielzahl von zu einem im wesentlichen kreisförmigen Filterkörper (28) aneinandergereihten Filterflächen (26; 26') aufweist, die sich im wesentlichen radial erstrecken und in mäanderförmiger Geometrie bezüglich der Prozeßluf-tströmung geneigt sind, und daß der Filterkörper (28) und die Filterflächen (26; 26') aus einem metallischen Mehrschichtgewebe gefertigt sind.

2. Prozeßapparatur nach Anspruch 1, **dadurch gekennzeichnet, daß** das Filter (20; 20') im wesentlichen horizontal liegend über der Prozeßkammer (12) angeordnet ist.

3. Prozeßapparatur nach Anspruch 1 oder 2, **dadurch gekennzeichnet, daß** ein Verhältnis aus Höhe (h) und radialer Ausdehnung der Filterflächen (26; 26') kleiner als 1 ist.

4. Prozeßapparatur nach Anspruch 3, **dadurch gekennzeichnet, daß** das Verhältnis im Bereich von etwa 0,1 bis 0,5 liegt.

5. Prozeßapparatur nach einem der Ansprüche 1 bis 4, **dadurch gekennzeichnet, daß** sich jede einzelne Filterfläche (26; 26') in radialer Richtung von außen nach innen strahlenförmig verjüngt.

6. Prozeßapparatur nach einem der Ansprüche 1 bis 5, **dadurch gekennzeichnet, daß** Zwischenräume (38, 40; 38', 40') zwischen benachbarten Filterflächen (26; 26') am Außenumfang des Filters (20; 20') radial offen sind.

7. Prozeßapparatur nach einem der Ansprüche 1 bis 6, **dadurch gekennzeichnet, daß** außenumfangsseitig zumindest ein Ring (48, 50) mit Endkanten der Filterflächen 26; 26') verbunden ist, wobei die Breite des Rings (48, 50) kleiner ist als die Höhe von Endkanten (44) der Filterflächen (26; 26').

8. Prozeßapparatur nach einem der Ansprüche 1 bis 7, **dadurch gekennzeichnet, daß** die Filterflächen (26') in Strömungsrichtung der Prozeßluft (14) gesehen konkav gekrümmt sind.

9. Prozeßapparatur nach einem der Ansprüche 1 bis 8, **dadurch gekennzeichnet, daß** es mittig eine verschließbare Öffnung (42) aufweist.

10. Prozeßapparatur nach einem der Ansprüche 1 bis 9, **dadurch gekennzeichnet, daß** die Filtereinrichtung (18) genau einen Filter (20; 20') aufweist, dessen Durchmesser in etwa dem Durchmesser der Prozeßkammer (12) der Prozeßapparatur (10) entspricht.

11. Prozeßapparatur nach Anspruch 9, **dadurch gekennzeichnet, daß** in der Öffnung (42) des Filters (20; 20') ein angetriebenes Mittel (96) zum Rütteln des Filters (20; 20') angeordnet ist.

12. Prozeßapparatur nach einem der Ansprüche 1 bis 11, **dadurch gekennzeichnet, daß** die Filtereinrichtung (18) eine umfängliche erste Dichtung (52) zum Abdichten eines Außenumfangs des Filters (20; 20') gegen eine Innenwand (56) der Prozeßapparatur (10) aufweist, wobei die Dichtung (52) von dem Filter (20; 20') abnehmbar ist.

13. Prozeßapparatur nach einem der Ansprüche 10 bis 12, soweit diese auf Anspruch 8 rückbezogen sind, **dadurch gekennzeichnet, daß** die Filtereinrichtung (18) eine umfängliche zweite Dichtung (54) zum Abdichten eines Innenumfangs des zumindest einen Filters (20; 20') aufweist, wobei die Dichtung (54) von dem Filter (20; 20') abnehmbar ist.

14. Prozeßapparatur nach Anspruch 12 oder 13, **dadurch gekennzeichnet, daß** die erste Dichtung (52) und/oder die zweite Dichtung (54) radial elastisch dehnbar ist und einen mit Druckluft beaufschlagbaren Hohlraum (60) aufweist.

15. Prozeßapparatur nach einem der Ansprüche 12 bis 14, **dadurch gekennzeichnet, daß** die erste Dichtung (52) und/oder die zweite Dichtung (54) eine umfängliche Trennungsfuge (74) aufweist, die eine vertikale Verschiebung des Filters (20; 20') bei Überschreiten eines Schwellwertes einer vertikal wirkenden Kraft ermöglicht.

16. Prozeßapparatur nach einem der Ansprüche 1 bis 15, **dadurch gekennzeichnet, daß** die Filtereinrichtung (18) radial verfahrbare Befestigungselemente (86) zum Befestigen des Filters (20; 20') in der Prozeßapparatur (10) aufweist.

17. Prozeßapparatur nach einem der Ansprüche 1 bis 16, **dadurch gekennzeichnet, daß** über dem Filter (20; 20') ein Mittel (112; 142) zum Abreinigen des partikelförmigen Guts (16) von dem Filter (20; 20') während eines Prozesses angeordnet ist.

18. Prozeßapparatur nach Anspruch 17, **dadurch gekennzeichnet, daß** das Mittel (142) zum Abreinigen zumindest einen in Rotation versetzbaren, mit Druckluft beaufschlagbaren Arm (146) aufweist, dessen Länge in etwa der radialen Ausdehnung der Filterflächen (26; 26') entspricht, und der auf seiner Unterseite zumindest eine Luftaustrittsdüse aufweist.

19. Prozeßapparatur nach Anspruch 17 oder 18, **dadurch gekennzeichnet, daß** das Mittel (112) zum Abreinigen zumindest einen in Rotation versetzbaren Arm (114, 116) aufweist, der ein solches Profil aufweist, daß durch Rotation des Armes (114, 116) eine nach unten gerichtete Druckwelle (117) erzeugt wird.

20. Prozeßapparatur nach einem der Ansprüche 1 bis 19, **dadurch gekennzeichnet, daß** über dem Filter (20; 20') ein Mittel (152) zum Waschen des Filters (20; 20') mit einer Waschflüssigkeit angeordnet ist.

21. Prozeßapparatur nach Anspruch 20, **dadurch gekennzeichnet, daß** das Mittel (152) zum Waschen zumindest einen in Rotation versetzbaren Sprüharm (156) aufweist, der auf seiner Unterseite zumindest einen Auslaß (158) für die Waschflüssigkeit aufweist.

22. Prozeßapparatur nach einem der Ansprüche 17 bis 19 und nach Anspruch 20 oder 21, **dadurch gekennzeichnet, daß** das Mittel (152) zum waschen in dem Mittel (112; 142) zum Abreinigen integriert ist.

## Claims

1. A processing apparatus, in particular granulating or coating apparatus, comprising a filtering assembly (18) arranged above or beside a processing chamber (12) for removing dust from process air (14) containing particulate material (16), the filtering assembly (18) including at least one filter (20; 20') being passed by the process air (14) coming from the processing chamber (12), **characterized in that** the filter (20; 20') comprises a plurality of filter surfaces (26; 26') arranged adjacently to form a substantially circular filter body (28), the filter surfaces extending substantially radially and being inclined in meander-like geometry with respect to the process air flow, and the filter body (28) and the filter surfaces (26; 26') are made of a metallic multi-layer fabric.

2. The processing apparatus of claim 1, **characterized in that** the filter (20; 20') is arranged to lie substantially horizontally above the processing chamber (12).

3. The processing apparatus of claim 1 or 2, **characterized in that** a ratio of the height h to the radial extension of the filter surfaces (26; 26') is smaller than 1.

4. The processing apparatus of claim 3, **characterized in that** the ratio is in the range of about 0.1 to 0.5.

5. The processing apparatus of anyone of claims 1 through 4, **characterized in that** each individual filter surface (26; 26') is tapered in ray-like manner in radial direction from the outside to the inside.

6. The processing apparatus of anyone of claims 1 through 5, **characterized in that** intermediate spaces (38, 40; 38', 40') between neighboring filter surfaces (26; 26') are radially open at the outer circumference of the filter (20; 20').

7. The processing apparatus of anyone of claims 1 through 6, **characterized in that** at least one ring (48, 50) is connected to the end edges of the filter surfaces (26; 26') at their outer circumference, wherein the width of the ring (48, 50) is smaller than the height of end edges (44) of the filter surfaces (26; 26').

8. The processing apparatus of anyone of claims 1 through 7, **characterized in that** the filter surfaces (26; 26') are curved to be concave as seen in the flow direction of the process air (14).

9. The processing apparatus of anyone of claims 1 through 8, **characterized in that** a closeable opening (42) is provided at its center.

10. The processing apparatus of anyone of claims 1 through 9, **characterized in that** the filtering assembly (18) comprises exactly one filter (20; 20') whose diameter corresponds approximately to the diameter of the processing chamber (12) of the processing apparatus (10).

11. The processing apparatus of claim 9, **characterized in that** a driven means (96) for agitating the filter (20; 20') is arranged in the opening (42) of the filter (20; 20').

12. The processing apparatus of anyone of claims 1 through 11, **characterized in that** the filtering assembly (18) comprises a first circumferential seal (52) for sealing an outer periphery of the filter (20; 20') against an inner wall (56) of the processing apparatus (10), wherein the seal (52) is removable from the filter (20; 20').

13. The processing apparatus of anyone of claims 10 through 12, when depending from claim 8, **characterized in that** the filtering assembly (18) comprises a circumferential second seal (54) for sealing an inner periphery of the at least one filter (20; 20'), wherein the seal (54) is removable from the filter (20; 20').

14. The processing apparatus of claim 12 or 13, **characterized in that** the first seal (52) and/or the second seal (54) is radially, elastically expandable and comprises a hollow space (60) supplyable with compressed air.

15. The processing apparatus of anyone of claims 12 through 14, **characterized in that** the first seal (52) and/or the second seal (54) has a circumferential separation joint (74), which allows a vertical shifting of the filter (20; 20') when exceeding a threshold value of a vertically acting force.

16. The processing apparatus of anyone of claims 1 through 15, **characterized in that** the filtering assembly (18) comprises radially displaceable fixing elements (86) for fixing the filter (20; 20') in the processing apparatus (10).

17. The processing apparatus of anyone of claims 1 through 6, **characterized in that** a means (112; 142) for cleaning off the particulate material (16) from the filter (20; 20') during the process is arranged above the filter (20; 20').

18. The processing apparatus of claim 17, **characterized in that** the means (142) for cleaning off comprises at least one rotatable arm (146) supplyable with compressed air, whose length corresponds approximately to the radial extension of the filter surfaces (26; 26') and whose underside comprises at least one air outlet nozzle.

19. The processing apparatus of claim 17 or 18, **characterized in that** the means (112) for cleaning off comprises at least one rotatable arm (114, 116) having a profile configured to create a pressure wave (117) directed downwardly by rotation of the arm (114, 116).

20. The processing apparatus of anyone of claims 1 through 19, **characterized in that** a means (152) for washing the filter (20; 20') with a washing fluid is arranged above the filter (20; 20').

21. The processing apparatus of claim 20, **characterized in that** the means (152) for washing comprises at least one rotatable spray arm (156) having at least one outlet (158) on its underside for the washing fluid.

22. The processing apparatus of anyone of claims 17 through 19 and of claim 20 or 21, **characterized in that** the means (152) for washing is integrated into the means (112; 142) for cleaning off.

## Revendications

1. Appareillage pour processus, en particulier appareillage de granulation ou de revêtement, comportant un dispositif à filtre (18) disposé au-dessus ou à côté d'une chambre de processus (12), pour dépoussiérer de l'air de processus (14) contenant un produit sous forme de particules (16), le dispositif à filtre (18) comportant au moins un filtre (20 ; 20') qui est traversé par l'air de processus (14) provenant de la chambre de processus (12), **caractérisé en ce que** le filtre (20 ; 20') comporte un grand nombre de surfaces de filtrage (26 ; 26') juxtaposées en un corps de filtrage (28) de forme sensiblement circulaire, lesquelles s'étendent sensiblement radialement et sont inclinées dans une géométrie en méandres par rapport à l'écoulement d'air de processus, et **en ce que** le corps de filtrage (28) et les surfaces de filtrage (26 ; 26') sont réalisés dans un tissu métallique multicouche.

2. Appareillage pour processus selon la revendication 1, **caractérisé en ce que** le filtre (20 ; 20') est disposé sensiblement horizontalement au-dessus de la chambre de processus (12).

3. Appareillage pour processus selon la revendication 1 ou 2, **caractérisé en ce que** le rapport entre la hauteur (h) et l'étendue radiale des surfaces de filtrage (26 ; 26') est inférieur à 1.

4. Appareillage pour processus selon la revendication 3, **caractérisé en ce que** le rapport est compris entre environ 0,1 et 0,5.

5. Appareillage pour processus selon l'une des revendications 1 à 4, **caractérisé en ce que** chaque surface de filtrage (26 ; 26') individuelle se rétrécit dans la direction radiale en forme de jet, de l'extérieur vers l'intérieur.

6. Appareillage pour processus selon l'une des revendications 1 à 5, **caractérisé en ce que** des interstices (38, 49 ; 38', 40') sont ouverts radialement entre des surfaces de filtrage (26 ; 26') adjacentes, sur le pourtour extérieur du filtre (20 ; 20').

7. Appareillage pour processus selon l'une des revendications 1 à 6, **caractérisé en ce que** sur le côté du pourtour extérieur au moins un anneau (48, 50) est relié à des bords d'extrémité des surfaces de filtrage (26 ; 26'), la largeur de l'anneau (48, 50) étant inférieure à la hauteur de bords d'extrémité (44) des surfaces de filtrage (26 ; 26').

8. Appareillage pour processus selon l'une des revendications 1 à 7, **caractérisé en ce que** les surfaces de filtrage (26') sont concaves, vues dans le sens d'écoulement de l'air de processus (14).

9. Appareillage pour processus selon l'une des revendications 1 à 8, **caractérisé en ce qu'**il présente en son centre une ouverture (42) qui peut être fermée.

10. Appareillage pour processus selon l'une des revendications 1 à 9, **caractérisé en ce que** le dispositif à filtre (18) comporte exactement un filtre (20 ; 20') dont le diamètre correspond approximativement au diamètre de la chambre de processus (12) de l'appareillage pour processus (10).

11. Appareillage pour processus selon la revendication 9, **caractérisé en ce que** dans l'ouverture (42) du filtre (20 ; 20') est disposé un moyen (96) entraîné pour faire vibrer le filtre (20 ; 20').

12. Appareillage pour processus selon l'une des revendications 1 à 11, **caractérisé en ce que** le dispositif à filtre (18) comporte une première garniture d'étanchéité (52) périphérique pour rendre étanche un pourtour extérieur du filtre (20 ; 20') à l'égard d'une paroi intérieure (56) de l'appareil pour processus (10), la garniture d'étanchéité (52) pouvant être enlevée du filtre (20 ; 20').

13. Appareillage pour processus selon l'une des revendications 10 à 12, dans la mesure où celles-ci sont dépendantes de la revendication 8, **caractérisé en ce que** le dispositif à filtre (18) comporte une deuxième garniture d'étanchéité (54) périphérique pour rendre étanche un pourtour intérieur du ou des filtres (20 ; 20'), la garniture d'étanchéité (54) pouvant être enlevée du filtre (20; 20').

14. Appareillage pour processus selon la revendication 12 ou 13, **caractérisé en ce que** la première garniture d'étanchéité (52) et/ou la deuxième garniture d'étanchéité (54) est extensible élastiquement et radialement et comporte une cavité (60) qui peut être alimentée en air sous pression.

15. Appareillage pour processus selon l'une des revendications 12 à 14, **caractérisé en ce que** la première garniture d'étanchéité (52) et/ou la deuxième garniture d'étanchéité (54) présente un joint de séparation (74) périphérique qui permet un déplacement vertical du filtre (20 ; 20') lorsqu'est dépassée une valeur seuil d'une force agissant verticalement.

16. Appareillage pour processus selon l'une des revendications 1 à 15, **caractérisé en ce que** le dispositif à filtre (18) comporte des éléments de fixation (86) déplaçables radialement pour la fixation du filtre (20 ; 20') dans l'appareillage pour processus (10).

17. Appareillage pour processus selon l'une des revendications 1 à 16, **caractérisé en ce qu'**un moyen (112; 142) est disposé au-dessus du filtre (20 ; 20') pour nettoyer le filtre (20 ; 20') du produit en forme de particules (16), pendant un processus.

18. Appareillage pour processus selon la revendication 17, **caractérisé en ce que** le moyen (142) de nettoyage comporte au moins un bras (146) qui peut être mis en rotation et alimenté en air comprimé, dont la longueur correspond approximativement à l'étendue radiale des surfaces de filtrage (26 ; 26'), et qui comporte au moins une buse de sortie d'air sur sa face inférieure.

19. Appareillage pour processus selon la revendication 17 ou 18, **caractérisé en ce que** le moyen (112) de nettoyage comporte au moins un bras (114, 116) qui peut être mis en rotation et qui présente un profil tel que par rotation du bras (114, 116) est produite une onde de choc (117) dirigée vers le bas.

20. Appareillage pour processus selon l'une des revendications 1 à 19, **caractérisé en ce qu'**au-dessus du filtre (20 ; 20') est disposé un moyen (152) pour laver le filtre (20 ; 20') avec un liquide de lavage.

21. Appareillage pour processus selon la revendication 20, **caractérisé en ce que** le moyen (152) de lavage comporte au moins un bras de pulvérisation (156) qui peut être mis en rotation et qui comporte, sur sa face inférieure, au moins une sortie (158) pour le liquide de lavage.

22. Appareillage pour processus selon l'une des revendications 17 à 19 et selon la revendication 20 ou 21, **caractérisé en ce que** le moyen (152) de lavage est intégré dans le moyen (112 ; 142) de nettoyage.
